# EUROPEAN PATENT SPECIFICATION

(11) **EP 0 797 308 B1**
(45) Date of publication and mention of the grant of the patent: **14.08.2002**
(21) Application number: 97104887.1
(22) Date of filing: 21.03.1997
(51) Int. Cl.: H04B 1/04, H04B 1/16, G08C 17/02

(54) **Radio data transmitter and receiver**
Funkdatensender und -empfänger
Emetteur et récepteur radio pour transmission de données

(30) Priority: 22.03.1996 JP 6688996
(43) Date of publication of application: 24.09.1997
(73) Proprietor: Tsubouchi, Kazuo, Taihaku-ku, Sendai-shi (JP)
(72) Inventor: Hozumi, Jun, Yokohama-shi, Kanagawa-ken (JP); Azuma, Toshiyuki, Yokohama-shi, Kanagawa-ken (JP); Tsubouchi, Kazuo, Sendai-shi, Miyagi-ken (JP)
(74) Representative: Klunker . Schmitt-Nilson . Hirsch

(56) References cited:
- WO-A-95/24027
- DE-A- 4 445 285
- US-A- 5 471 212
- US-A- 5 488 662

## Description

The present invention relates to a radio data transmitter and a radio communication system in which power consumption is reduced.

Nowadays, research on radio meter-reading systems for power, gas, and so forth is in progress. The radio meter-reading system enables a meter reader to measure consumption of power, gas, and so forth with a radio meter-reading apparatus from an automobile, without going to the place where the meters are installed.

What should be solved in the above type of conventional system is power consumption of a meter-reading apparatus while in standby mode. In other words, to activate the meter-reading apparatus by radio, the meter-reading apparatus must be standing by (condition capable of receiving radio waves). Accordingly, a receiving circuit must always be activated. However, maintaining the active state of the receiving circuit increases power consumption. For example, when a meter-reading apparatus is activated by a battery of small capacity, the power consumption of the receiving circuit extremely shortens the life of the battery. In particular, since meter-reading apparatus is activated only once a month, it is not preferable that the receiving circuit consume wasted power for the remaining 29 days (or 30 days).

WO 95/24027 discloses a radio communication system including a radio data-transmitter, which is periodically activated to monitor a communication channel. If communication activity is detected, the radio data transmitter monitors a message adressed to the transmitter. When messages adressed to the transmitter are detected, the message is processed within the radio data transmitter. If no communication activity is detected or if no message adressed to the transmitter is detected, the transmitter is deactivated and waits for a further periodic activation.

US-A-5,488,662 discloses a system for identifying an arrival time of a communicated signal. The system makes use of a SAW correlator. This prior art system, however, is not a remote meter-reading system or radio data communication system.

Accordingly, it is an object of the present invention to provide a radio data transmitter and a radio communication system to be activated for data transmission and reception in accordance with a radio signal, in which power consumed when the transmitter and receiver stand by is reduced to approximately zero.

According to a first aspect of the present invention, the foregoing object is achieved through the provision of a radio data transmitter comprising: the features of claim 1.

In the radio data transmitter the radio switching means includes a receiving antenna; a surface acoustic wave device to which a signal received by the receiving antenna is applied for extracting a particular pattern included in the signal; an accumulation circuit for accumulating an output power from the surface acoustic wave device; and a switching circuit being activated when the output power from the accumulating circuit exceeds a constant value.

The surface acoustic wave device may comprise a surface acoustic wave matched filter.

The surface acoustic wave matched filter may include an Al₂O₃ substrate, an AlN film formed on the Al₂O₃ substrate, and an Al tapping pattern formed on the AlN film.

According to a second aspect of the present invention, the foregoing object is achieved through the provision of a radio communication system including the features of claim 4.

The switch-activation means may include noise code generating means for generating a pseudorandom noise code; modulation means for modulating a carrier by using the noise code; and an antenna for radiating a signal modulated by the modulation means in the air.

The above-described present invention provides radio data transmitter and radio communication system in which power consumed when they stand by can be reduced to approximately zero.

### BRIEF DESCRIPTION OF THE DRAWINGS

Fig. 1 is a block diagram showing a radio data transmitter according to an embodiment of the present invention.

Fig. 2 is a block diagram showing a data collector for activating the radio data transmitter shown in Fig. 1.

Figs. 3A to 3C are waveform charts showing signals in portions of a switch-activation circuit.

Fig. 4 is a perspective view illustrating a surface acoustic wave correlator shown in Fig. 1.

Fig. 5 is a circuit diagram showing an accumulation circuit shown in Fig. 1.

Figs. 6A and 6B are waveform charts showing signals in portions of the circuit shown in Fig. 5.

Fig. 7 is a circuit diagram showing details of a threshold discharger and a relay switch, which are shown in Fig. 1.

Fig. 8 is a block diagram showing a data transmitting unit shown in Fig. 1.

Fig. 9 is a circuit diagram showing a modification of the circuit shown in Fig. 7.

Fig. 10 is a schematic, cross-sectional view illustrating an example of a data collector for collecting the number (data) of sold juice cans.

### DESCRIPTION OF THE PREFERRED EMBODIMENT

By referring to the attached drawings, an embodiment of the present invention will be described below.

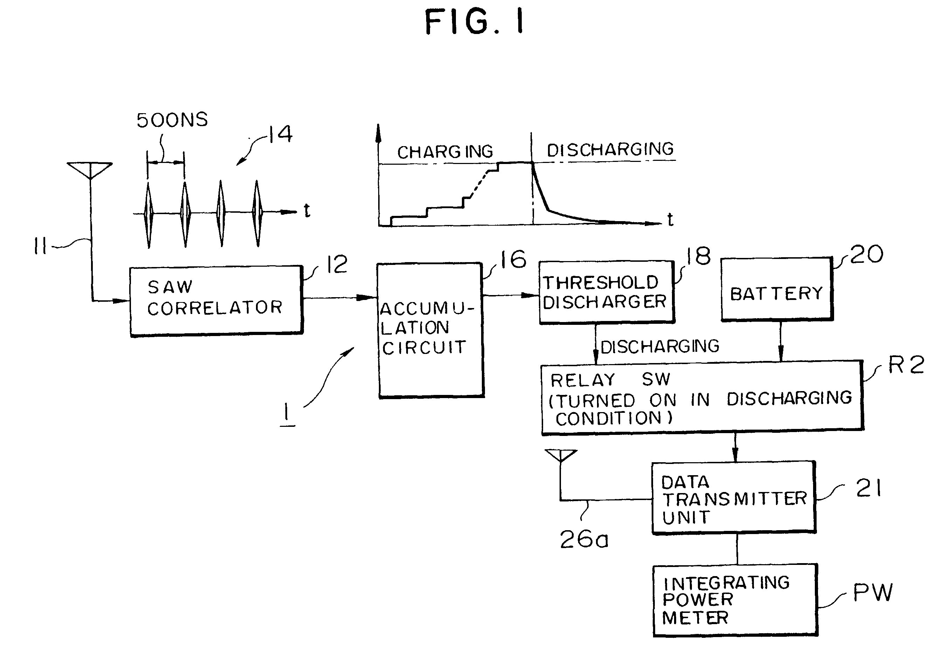

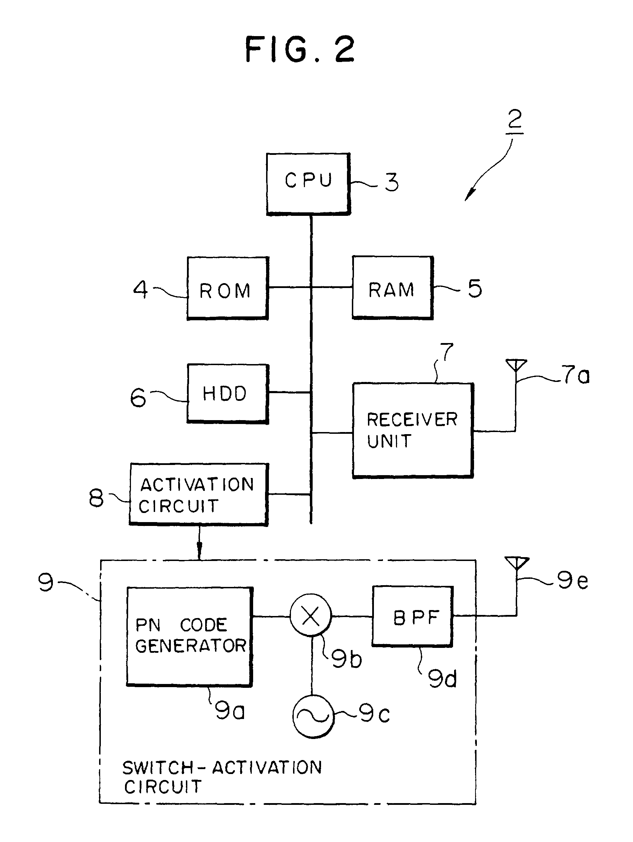

Fig. 1 shows a block diagram of a radio data transmitter 1 according to one embodiment of the present invention. Fig. 2 shows a data recorder 2 (radio data receiver) which drives the radio data transmitter 1 from a remote place and records data transmitted from the radio data transmitter 1.

The data recorder 2 shown in Fig. 2 includes a central processing unit (CPU) 3, a read-only memory (ROM) 4 for storing programs used in the CPU 3, a random access memory (RAM) 5 for temporarily storing data, a hard disk drive (HDD) 6, and a receiver unit 7 for receiving data transmitted from the radio data transmitter 1 (shown in Fig. 1). Data received by the receiver unit 7 is recorded by the hard disc drive 6. An activation circuit 8 activates a switch-activation circuit 9. The activation circuit 8 receives an activation instruction from the CPU 3 and switches on the power switch of the switch-activation circuit 9 for operation.

The switch-activation circuit 9 activates the radio data transmitter 1 by spread spectrum communication.

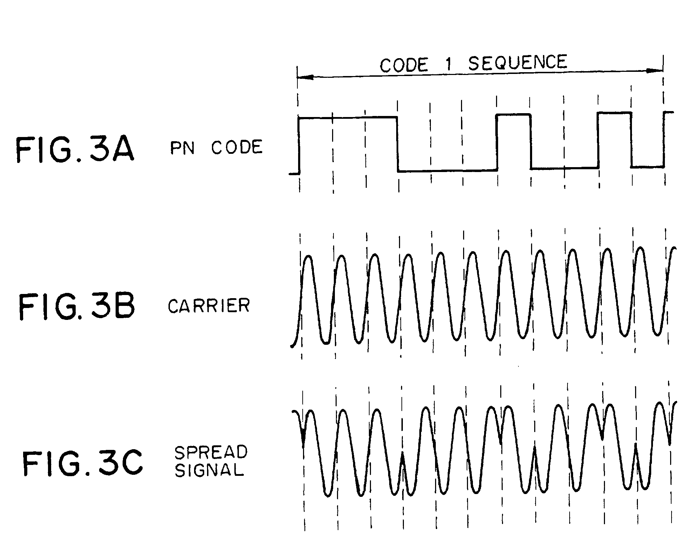

The switch-activation circuit 9 includes a PN code generator 9a. A PN code is a cyclic, pseudorandom noise code. Known PN code are a Maxim in length sequence, a Barker sequence, a Gold sequence, and so forth. The PN code generator 9a repeatedly generates and outputs a PN code shown in Fig. 3A to a modulation circuit 9b during a predetermined period. The PN code shown in Fig. 3A is a 11-chip Barker code, and one cycle of the code is expressed as follows:
11100010010

An oscillation circuit 9c generates a carrier. The waveform of the carrier is shown in Fig. 3B. The modulation circuit 9b outputs a spread modulated carrier, utilizing the PN code. The output waveform of the modulation circuit 9b is shown in Fig. 3C. The output of the modulation circuit 9b is radiated from an antenna 9e through a band-pass filter 9d.

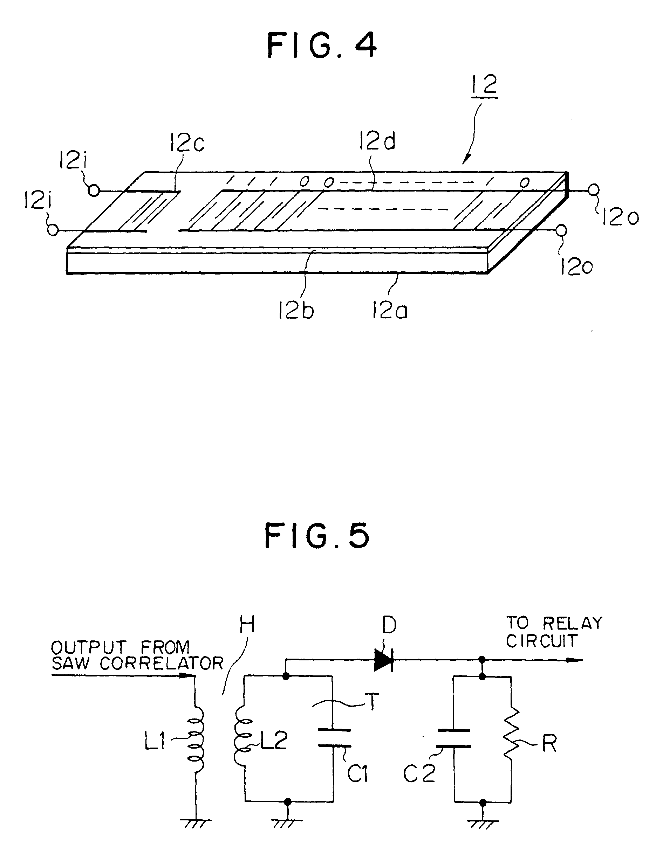

The radio data transmitter 1 shown in Fig. 1 includes a receiving antenna 11 and a surface acoustic wave (SAW) correlator 12 (SAW matched filter). Fig. 4 shows a perspective view of the SAW correlator 12. The SAW correlator 12 includes a substrate 12a comprised of Al₂O₃ (sapphire) and an AlN (aluminum nitride) film 12b formed on the Al₂O₃ substrate by an MO-CVD method. An aluminum (Al) input pattern 12c and an Al tapping pattern 12d are formed on the AlN film 12b by an opto-lithography technique. The Al tapping pattern 12d corresponds to the above-mentioned Barker code (11100010010).

When a spread signal shown in Fig. 3C is received by the antenna 11, and is applied to the input pattern 12c of the SAW correlator 12, the applied signal becomes a surface acoustic wave, which is conducted by the surface of the SAW correlator 12 through the tapping pattern 12d. When the phase of the conducted wave motion coincides with the tapping pattern 12d, the amplitude of each wave is integrated, and a correlated peak eleven times the amplitude appears at output ends 12o of the tapping pattern 12d. In other words, as shown in Fig. 1, correlated peaks 14 appear for eleven cycles of the carrier at the output ends 12o of the SAW correlator 12. When the phase of the wave motion does not coincide with the tapping pattern 12d, the voltage across the output ends 12o is 1/11 of the correlated peak or less. The outputs of the SAW correlator 12 are inputted to an accumulation circuit 16.

The AlN-on-Al₂O₃ structure shown in Fig. 4 has a propagation velocity of approximately 6000 m/second, which is 1.5 to 2 times higher than that of other piezoelectric bodies. This enables a large size to be processed. In addition, the structure has a relatively large electromechanical coupling coefficient of approximately 1%. This provides a propagation period temperature coefficient of zero, so the structure is suitable for a gigahertz-band surface acoustic wave material.

As shown in Fig. 5, the accumulation circuit 16 includes a high frequency coil H comprised of a primary coil L1 and a secondary coil L2, a tank circuit T comprised of the secondary coil L2 and a capacitor C1 which are connected in parallel, a diode D for rectifying the output of the tank circuit T, a capacitor C2 for accumulating the output of the diode D, and a resistor R connected in parallel to the capacitor C2.

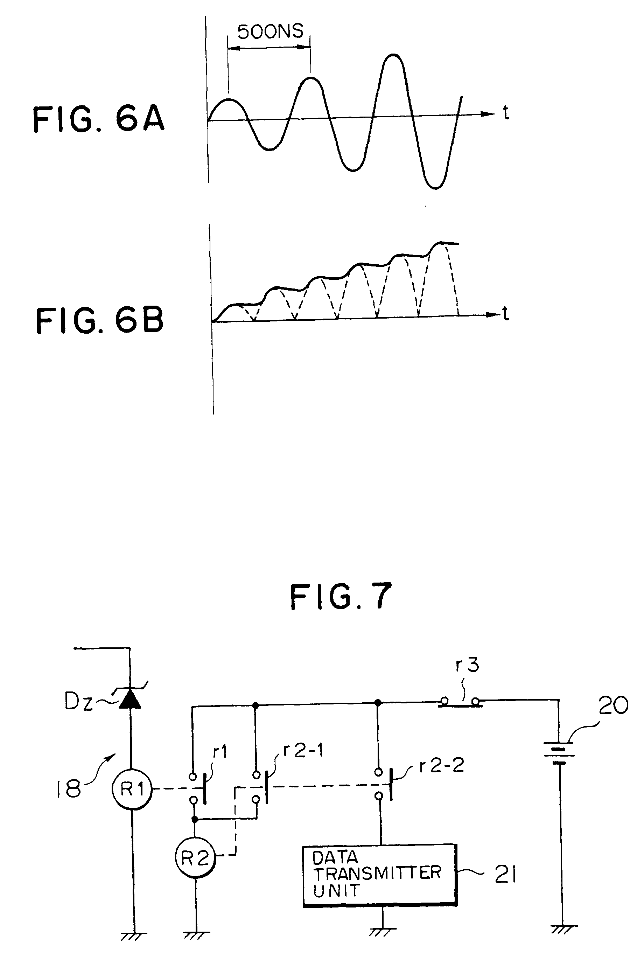

The resonance frequency of the tank circuit T coincides with the frequency (2 MHz) of the correlated peak waveform outputted from the SAW correlator 12. As a result, the tank circuit T accepts only correlated peak components, and sequentially accumulates the components. In Fig. 6A, the voltage between both ends of the capacitor C1 is shown. The output voltage of the tank circuit T charges the capacitor C2 via the diode D. As a result, as shown in Fig. 6B, the voltage between both ends of the capacitor C2 successively increases. The voltage of the capacitor C2 is applied to a threshold discharger 18.

A configuration of the threshold discharger 18 and the relay switch R2 is shown in Fig. 7. The threshold discharger 18 includes a Zener diode Dz and a relay switch R1 connected in series to the Zener diode Dz. The relay switch R1 consumes small power (for example, 50 mW). When the output voltage of the accumulation circuit 16 exceeds the Zener voltage of the Zener diode Dz, the Zener diode Dz is switched on to activate the relay switch R1, and a contact r1 is closed. Thereby, the voltage of the battery 20 is supplied to the relay switch R2 to be activated, so contacts r2-1 and r2-2 are closed. When the contact r2-1 is closed, the relay switch R2 is self-held. When the contact r2-2 is closed, the voltage of the battery 20 is supplied to a data transmitting unit 21 to operate.

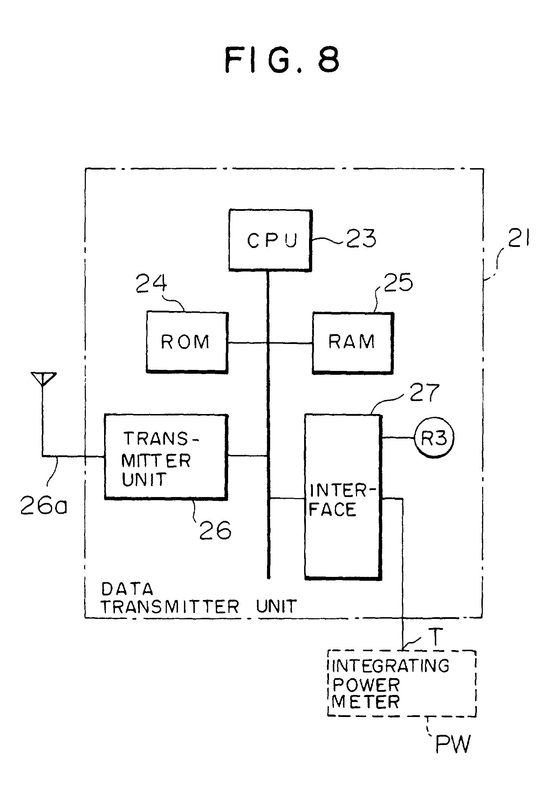

Fig. 8 shows a block diagram of the data transmitting unit 21. The data transmitting unit 21 includes a central processing unit (CPU) 23, a read-only memory (ROM) 24, a random access memory (RAM) 25, a transmitter 26, and an interface circuit 27. In addition, a relay switch R3 has a normally closed contact r3 which is inserted in the circuit of the battery 20 as shown in Fig. 7. Power consumption of a building is always integrated by, for example, an integrating wattmeter PW, and the integrated result is outputted as digital data from an output terminal T.

When the contact r2-2 shown in Fig. 7 is closed, the output voltage of the battery 20 is supplied as a supply voltage to the data transmitting unit 21, and each unit of the data transmitting unit 21 is activated. When supplied with a voltage, the CPU 23 reads data obtained at the terminal T of the integrating wattmeter PW through the interface 27, and sends the read data to the transmitter 26. The transmitter 26 transmits the data with a carrier in the air from an antenna 26a. The transmitted signal is received and demodulated by the receiver 7 shown in Fig. 2, and is recorded by the hard disk drive 6 through the CPU 3.

The CPU 23 (shown in Fig. 8) drives the relay switch R3 via the interface 27 when the transmitter 26 terminates transmission of data. The relay switch R3 is driven, then the contact r3 (Fig. 7) is open, and the coil power supply of the relay switch R2 is switched off. Thereby, the contact r2-2 is open, so the power supply of the data transmitting unit 21 is switched off.

Details of one embodiment of the present invention, shown in Figs. 1 and 2, have been described. According to this embodiment, data obtained by the integrating wattmeter PW in the building can be collected from, for example, an automobile, without going to the place where the wattmeter PW is installed. In addition, until the phase of the SAW based on the signal received by the antenna 11 (Fig. 1) completely coincides with the tapping pattern 12d of the SAW correlator 12, the data transmitting unit 21 is not activated, and thus hardly malfunctions, which advantageously realizes high reliability. Also, until the relay switch R1 is activated, the circuit of the battery 20 is completely, mechanically broken by the contacts r1, r2-1 and r2-2. Hence, leakage power is theoretically zero, which causes power consumption of the battery 20 to be zero in standby mode.

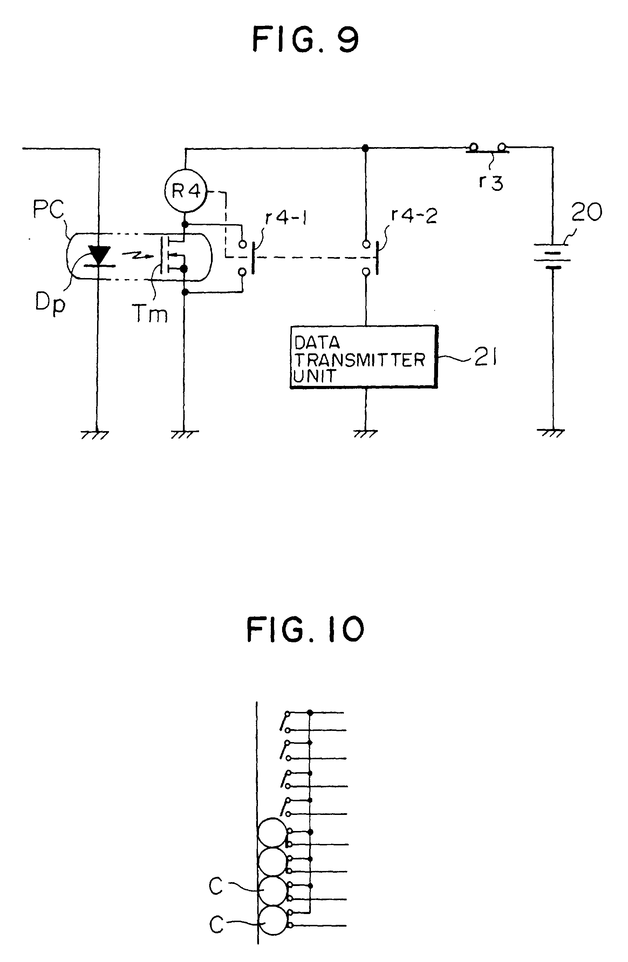

To improve sensitivity, a circuit shown in Fig. 9 may be used for the circuit shown in Fig. 7. This circuit in Fig. 9 includes a photocoupler PC comprised of a light-emitting diode Dp and a MOS phototransistor Tm, for the Zener diode Dz and the relay switch R1 in Fig. 7. According to this circuit, when the output voltage of the accumulation circuit 16 reaches the forward voltage of the light-emitting diode Dp or higher, the light-emitting diode Dp is switched on to emit light, which switches on the phototransistor Tm. Then, a relay switch R4 is activated to close contacts r4-1 and r4-2. Closing the contact r4-1 causes the self-holding of the relay switch R4. Closing the contact r4-2 causes the voltage of the battery 20 to be supplied to the data transmitting unit 21.

According to the circuit shown in Fig. 8, compared with the circuit in Fig. 7, lower output voltage of the accumulation circuit 16 can activate the relay switch R4. While the circuit in Fig. 8 is in standby mode, a leakage current flows through the relay switch R4 and the phototransistor Tm. However, the leakage current from the phototransistor Tm is 100 pA or less, thus, power consumption of the battery 20 in standby mode can be substantially reduced to approximately zero.

The above-described embodiment can be applied not only to collection of data from the integrating wattmeter PW but also to collection of sales data from, for example, an automatic vending machine of juice cans. According to the latter case, as shown in Fig. 10, for example, switches are disposed along a storage of cans C, and when each can C is stored, the switch for the storing portion is turned on. Outputs from the respective switches may be read by the CPU 23 via the interface 27 shown in Fig. 8. Instead of using the switches, by providing a passage detector to a can receiving portion and by providing a mechanical counter to a can discharging portion so that the number of cans is counted whenever a can passes through the passage detector, the counted data may be read by the CPU 23 via the interface 27.

## Claims

1. A radio data transmitter (1) comprising :
radio switching means including:
a receiving antenna (11);
a surface acoustic wave device (12) to which a signal received by said receiving antenna (11) is applied for extracting a particular pattern included in said signal;
an accumulation circuit (16) for accumulating an output power from said surface acoustic wave device (12);
and a switching circuit (18, R2) being activated when said output power from said accumulating circuit (12) exceeds a specfic value.
and a data transmitter unit (21) being supplied with power in accordance with the activation of the radio switching means, transmitting a carrier modulated by predetermined data from a transmitting antenna (26a) and then switching off its power.

2. A radio data transmitter according to Claim 1, wherein said surface acoustic wave device (12) comprises a surface acoustic wave matched filter.

3. A radio data transmitter according to Claim 2, wherein said surface acoustic wave matched filter comprises an Al₂O₃ substrate, an A1N film formed on said Al₂O₃ substrate, and an Al tapping pattern formed on said A1N film.

4. A radio communication system including:
switch-activation means (9) for transmitting data having a predetermined particular pattern;
receiving means (7) for receiving data from a data transmitter (21) activated by said data having the predetermined particular pattern;
and storage means (6) for storing data received by said receiving means (7) and
radio switching means including:
a receiving antenna (11);
a surface acoustic wave device (12) to which a signal received by said receiving antenna (11) is applied for extracting a particular pattern included in said signal;
an accumulation circuit (16) for accumulating an output power from said surface acoustic wave device (12);
and a switching circuit (18, R2) being activated when said output power from said accumulating circuit (12) exceeds a specific value,
a radio data transmitter including a data transmitter unit (21) being supplied with power in accordance with the activation of the radio switching means, transmitting from a transmitting antenna (26a) a carrier modulated by predetermined data and then switching off its power.

5. The radio communication system according to Claim 4, wherein
said switch-activation means (9) includes:
noise code generating means (9a) for generating a pseudorandom noise code;
modulation means (9b) for modulating a carrier by using said noise code;
and an antenna (9e) for radiating a signal modulated by said modulation means in the air.

## Patentansprüche

1. Funktdatensender (1), umfassend:
eine Funkschalteinrichtung, enthaltend eine Empfangsantenne (11);
ein akustisches Oberflächenwellenbauelement (12), an welches ein von der Empfangsantenne (11) empfangenes Signal gelegt wird, um ein in dem Signal enthaltenes spezielles Muster zu extrahieren;
eine Akkumulatorschaltung (16) zum Akkumulieren einer Ausgangsleistung von dem akustischen Oberflächenwellenbauelement (12);
und eine Schalteinrichtung (18, R2), die aktiviert wird, wenn die Ausgangsleistung von der Akkumulatorschaltung (12) einen spezifischen Wert übersteigt, und eine Datensendeeinheit (21), die mit Leistung entsprechend der Aktivierung der Funkschalteinrichtung gespeist wird, die einen von vorbestimmten Daten modulierten Träger über eine Sendeantenne (26a) sendet und anschließend ihre Leistung abschaltet.

2. Funkdatensender nach Anspruch 1, bei dem das akustische Oberflächenwellenbauelement (12) ein angepaßtes akustischens Oberflächenwellenfilter aufweist.

3. Funkdatensender nach Anspruch 2, bei dem das angepaßte akustische Oberflächenwellenfilter ein Al₂O₃-Substrat, einen AIN-Film auf dem Al₂O₃-Substrat und ein Al-Anzapfmuster, das auf dem AIN-Film ausgebildet ist, aufweist.

4. Funkkommunikationssystem, umfassend:
eine Schalteraktiviereinrichtung (9) zum Senden von Daten mit einem vorbestimmten speziellen Muster;
eine Empfangseinrichtung (7) zum Empfangen von Daten von einem Datensender (21), aktiviert durch die Daten mit dem vorbestimmten speziellen Muster; und
eine Speichereinrichtung (6) zum Speichern von Daten, die von der Empfangseinrichtung (7) empfangen wurden, und
eine Funkschalteinrichtung, umfassend:
eine Empfangsantenne (11),
ein akustisches Oberflächenwellenbauelement (12), an das ein von der Empfangsantenne (11) empfangenes Signal angelegt wird, um ein in dem Signal enthaltenes spezielles Muster zu extrahieren;
eine Akkumulatorschaltung (16) zum Akkumulieren einer Ausgangsleistung von dem akustischen Oberflächenwellenbauelement (12);
und eine Schalteinrichtung (18, R2), die aktiviert wird, wenn die Ausgangsleistung von der Akkumulatorschaltung (12) einen spezifischen Wert übersteigt, einen Funkdatensender mit einer Datensendeeinheit (21), gespeist mit Leistung entsprechend dem Aktivieren der Funkschalteinrichtung, von einer Sendeantenne (26a) einen mit vorbestimmten Daten modulierten Träger sendend, und anschließend ihre Leistung abschaltend.

5. Funkkommunikationssystem nach Anspruch 4, bei dem die Schalteraktiviereinrichtung (9) enthält:
eine Rauschcode-Erzeugungseinrichtung (9a) zum Erzeugen eines pseudostatistischen Rauschcodes;
eine Modulationseinrichtung (9b) zum Modulieren eines Trägers unter Verwendung des Rauschcodes;
und eine Antenne (9e) zum Abstrahlen eines von der Modulationseinrichtung modulierten Signals in die Luft.

## Revendications

1. Emetteur radio (1) pour transmission de données comprenant :
un moyen de commutation radio comportant :
une antenne réceptrice (11),
un dispositif à ondes acoustiques de surface (12) auquel est appliqué un signal reçu par ladite antenne réceptrice (11) pour extraire un motif particulier inclus dans ledit signal,
un circuit d'accumulation (16) pour accumuler une puissance de sortie provenant dudit dispositif à ondes acoustiques de surface (12),
et un circuit de commutation (18, R2) qui est activé quand ladite puissance de sortie provenant dudit circuit d'accumulation (12) dépasse une valeur spécifique,
et un module d'émission (21) de données qui reçoit du courant en fonction de l'activation du moyen de commutation radio, qui transmet une porteuse modulée par des données préalablement déterminées à partir d'une antenne émettrice (26a) puis qui coupe son courant.

2. Emetteur radio pour transmission de données selon la revendication 1, dans lequel ledit dispositif à ondes acoustiques de surface (12) comprend un filtre adapté pour ondes acoustiques de surface.

3. Emetteur radio pour transmission de données selon la revendication 2, dans lequel ledit filtre adapté pour ondes acoustiques de surface comprend un substrat en Al₂O₃, un film en AlN formé sur ledit substrat en Al₂O₃, et un motif de captage en Al formé sur ledit film en AlN.

4. Système de communication radio comprenant :
un moyen (9) à commande par interrupteur pour transmettre des données ayant un motif particulier préalablement déterminé ;
un moyen de réception (7) pour recevoir des données provenant d'un émetteur (21) de données activé par lesdites données ayant le motif particulier préalablement déterminé ;
et un moyen de stockage (6) pour stocker les données reçues par ledit moyen de réception (7) et
un moyen de commutation radio comportant :
une antenne réceptrice (11),
un dispositif à ondes acoustiques de surface (12) auquel est appliqué un signal reçu par ladite antenne réceptrice (11) pour extraire un motif particulier inclus dans ledit signal,
un circuit d'accumulation (16) pour accumuler une puissance de sortie provenant dudit dispositif à ondes acoustiques de surface (12),
et un circuit de commutation (18, R2) qui est activé quand ladite puissance de sortie provenant dudit circuit d'accumulation (12) dépasse une valeur spécifique,
un émetteur radio pour transmission de données comprenant un module d'émission (21) de données qui reçoit du courant en fonction de l'activation du moyen de commutation radio, qui transmet une porteuse modulée par des données préalablement déterminées à partir d'une antenne émettrice (26a) puis qui coupe son courant.

5. Système de communication radio selon la revendication 4, dans lequel ledit moyen (9) à commande par interrupteur comprend :
un moyen de génération de code de bruit (9a) pour générer un code de bruit pseudo-aléatoire ;
un moyen de modulation (9b) pour moduler une porteuse en utilisant ledit code de bruit ;
et une antenne (9e) pour émettre un signal modulé par ledit moyen de modulation dans l'air.
